# FASCICULE DE BREVET EUROPEEN

(11) **EP 0 653 719 B1**
(45) Date de publication et mention de la délivrance du brevet: **07.07.1999**
(21) Numéro de dépôt: 94402456.1
(22) Date de dépôt: 31.10.1994
(51) Int. Cl.: G06K 7/06, H01H 13/28, H01H 13/12

(54) **Commutateur électrique, notamment pour la détection de la présence d'une carte à mémoire électronique dans un dispositif de lecture de cartes**
Elektronischer Schalter insbesondere zur Erkennung der Anwesenheit einer IC-Karte in einem Kartenleser
Electronic switch in particular for the detection of the presence of an IC card in a card reader

(30) Priorité: 09.11.1993 FR 9313334
(43) Date de publication de la demande: 17.05.1995
(73) Titulaire: ITT COMPOSANTS ET INSTRUMENTS, F-92220 Bagneux (FR)
(72) Inventeur: Carvalho, Aurélien, F-39100 Sampans (FR); Janniere, Alain, F-75004 Paris (FR)
(74) Mandataire: Kohn, Philippe

(56) Documents cités:
- EP-A- 0 231 409
- FR-A- 2 468 197
- FR-A- 2 665 027
- GB-A- 2 155 240
- US-A- 3 261 955

## Description

La présente invention concerne un commutateur électrique.

L'invention concerne plus particulièrement un commutateur de détection de la présence d'une carte dans un dispositif de lecture des informations contenues dans la carte, notamment d'une carte à mémoire électronique, du type comportant un organe de déclenchement du commutateur avec lequel coopère le bord transversal antérieur de la carte perpendiculaire à la direction d'introduction de la carte, par exemple du type décrit et représenté dans le document EP-A1-0.231.409.

Le document FR-A-2.607.291 décrit et représente un connecteur électrique pour carte à mémoire électronique du type comportant un micro-contact électrique de détection de position de la carte constitué par une lame de détection déformable élastiquement dont une extrémité libre coopère avec le bord transversal antérieur de la carte qui la déforme élastiquement pour provoquer l'ouverture ou la fermeture du contact électrique en fonction de la position de la carte par rapport à un cadre support portant la lame de détection et portant des lames de contact d'un connecteur de raccordement électrique avec les pistes conductrices d'une carte.

Une telle conception d'un commutateur électrique de détection de la présence d'une carte présente plusieurs inconvénients.

Premièrement, pour sa réalisation, elle nécessite d'intégrer le micro-contact au connecteur du dispositif de lecture de carte et le micro-contact ne peut pas faire l'objet d'un sous-ensemble indépendant pouvant être intégré directement au boîtier du dispositif de lecture de carte.

Deuxièmement, en position introduite de la carte correspondant à la position de lecture des informations contenues dans la carte, la lame déformable élastiquement du commutateur exerce en permanence sur la carte un effort de répulsion qui sollicite la carte à l'encontre de sa direction d'introduction, la valeur de l'effort de répulsion croissant sensiblement proportionnellement avec la valeur de la course d'introduction de la carte dans le dispositif de lecture, la force de répulsion augmentant de plus au-delà de la position de déclenchement du micro-contact si la carte effectue une course supplémentaire avant d'atteindre une butée fixe de fin de course d'introduction.

Troisièmement, cette conception ne permet pas de disposer de course supplémentaire importante au-delà de la position de déclenchement du micro-contact car une course supplémentaire trop importante risquerait de détériorer la lame déformable élastiquement et d'affecter la sensibilité du micro-contact.

Enfin, il est nécessaire que la sensibilité du commutateur, compte-tenu de son agencement dans un dispositif de lecture de cartes, soit suffisante pour être compatible avec le diagramme de connexion des cartes à micro-circuit qui impose que le commutateur change d'état lors de l'introduction d'une carte après l'établissement du contact électrique avec la dernière piste conductrice de la carte, et qu'il change à nouveau d'état lors de l'extraction de la carte avant l'interruption du contact électrique avec la première piste conductrice de la carte.

Afin de remédier à ces inconvénients, il a déjà été proposé dans le document FR-A-2.665.027 une conception selon laquelle le bord transversal antérieur de la carte coopère avec un levier qui s'étend dans un plan sensiblement parallèle au plan de la carte et dont une extrémité coopère avec un organe de déclenchement d'un commutateur agencé sous la carte. Cette conception permet de supprimer l'effort de répulsion en position introduite de la carte et d'admettre une course supplémentaire importante mais le levier est un composant complexe à réaliser et qui nécessite de plus son intégration au cadre du connecteur du dispositif de lecture de la carte.

L'invention n'est pas limitée à son application à la détection de la présence d'une carte dans un dispositif de lecture-écriture.

L'invention concerne également un commutateur électrique qui peut par exemple être utilisé comme bouton poussoir à actionnement manuel.

Dans certaines applications, un tel bouton poussoir est sollicité par son utilisateur pour provoquer la mise en oeuvre d'une fonction électrique.

C'est par exemple le cas lorsqu'il est intégré dans un crayon de lecture optique pour le déchiffrage d'un code à barres. Dans une telle application l'utilisateur tient en permanence le crayon de lecture et il provoque sa mise en marche, pour la lecture d'un code à barres, en appuyant avec un doigt, par exemple avec son index, sur un bouton poussoir intégré au crayon de lecture.

L'extrémité du doigt de l'utilisateur est donc en permanence en contact avec le bouton poussoir du commutateur et il est souhaitable qu'en position enfoncée du bouton poussoir, correspondant à l'actionnement du crayon de lecture, l'effort de rappel appliqué au bouton poussoir soit le plus faible possible afin que l'utilisation prolongée du crayon de lecture n'entraîne pas de douleur pour son utilisateur.

Il est également souhaitable que l'effort au début de la course d'actionnement du commutateur soit relativement faible, de préférence nul, de manière que l'utilisateur qui tient le crayon en main et qui exerce en permanence une légère sollicitation sur le bouton poussoir, même au repos, ne souffre pas non plus de la coopération prolongée de l'extrémité de son doigt avec le bouton poussoir.

Il a déjà été proposé dans le document FR-A-2.468.197 une conception d'un interrupteur à bouton poussoir à élément élastique d'action rapide.

Les différentes conceptions proposées dans ce document permettent de faire de varier la valeur de la force de rappel exercée sur le bouton poussoir lors de la course d'actionnement de ce dernier, notamment en vue de conférer à l'utilisateur une sensation tactile de l'actionnement.

Toutefois, les conceptions proposées dans ce document ne permettent pas de maîtriser avec précision l'ouverture ou la fermeture d'un contact électrique intégré au commutateur en un point précis de sa course d'actionnement du bouton poussoir.

La présente invention a pour but de proposer une nouvelle conception d'un commutateur électrique qui permet de remédier aux inconvénients mentionnés précédemment.

Dans ce but, l'invention propose un commutateur électrique comportant un poussoir de déclenchement qui est monté coulissant dans un boîtier de commutateur, un élément de contact mobile qui est lié au poussoir qui coopère avec au moins un élément de contact fixe porté par le boîtier du commutateur, et des moyens de rappel élastique du poussoir vers une position stable de repos dont la valeur de la force de rappel diminue lorsque la course d'actionnement du poussoir dépasse une valeur prédéterminée, caractérisé en ce que la dite valeur prédéterminée correspond au déclenchement du commutateur, et en ce que la valeur de la force de rappel augmente puis diminue lors de la course d'actionnement en passant par un maximum correspondant au déclenchement du commutateur.

Selon d'autres caractéristiques de l'invention :
- les moyens de rappel élastique comportent au moins un ressort de rappel disposé entre le poussoir et le boîtier du commutateur et qui sollicite le poussoir vers sa position stable de repos ;
- le ressort de rappel est un ressort hélicoïdal cambré disposé à l'intérieur du boîtier et qui s'étend selon une direction transversale sensiblement perpendiculaire à la direction de déplacement du poussoir dont une extrémité de déclenchement coopère avec la partie centrale convexe du ressort cambré ;
- chacune des extrémités opposées du ressort est reçue dans un logement dont l'axe est incliné par rapport à la direction de déplacement du poussoir de façon à conférer au ressort une cambrure stable au repos dont la convexité est tournée vers l'extrémité de déclenchement du poussoir ;
- le contact mobile comporte au moins une lame de contact déformable élastiquement dont une extrémité libre coopère avec l'élément de contact fixe et qui, dans la position de repos du poussoir, exerce une force élastique sur le poussoir opposée à la force exercée par le ressort de rappel ;
- la lame de contact s'étend selon une direction sensiblement parallèle à la direction de coulissement du poussoir et son extrémité libre coopère avec une rampe formée sur le contact fixe qui est inclinée par rapport à la direction de déplacement du poussoir ;
- dans la position de repos du poussoir, l'extrémité libre de la lame de contact déformable élastiquement est en contact électrique avec l'élément de contact fixe de manière à appliquer au poussoir une force élastique opposée à celle qui lui est appliquée par le ressort de rappel ;
- le commutateur présente une symétrie de conception par rapport à un plan médian passant par l'axe de déplacement du poussoir ;
- le contact mobile comporte deux lames de contact déformables élastiquement agencées symétriquement de part et d'autre du corps du poussoir ;
- pour la détection de la présence d'une carte dans un dispositif de lecture des informations contenues dans la carte, notamment d'une carte à mémoire électronique, une extrémité d'actionnement du poussoir fait saillie à l'extérieur du boîtier pour coopérer avec le bord transversal antérieur de la carte perpendiculaire à la direction d'introduction de la carte, le poussoir de déclenchement étant monté coulissant selon une direction sensiblement parallèle à la direction d'introduction de la carte.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective illustrant un premier mode de réalisation d'un commutateur réalisé conformément aux enseignements de l'invention dont le poussoir coopère avec le bord antérieur d'une carte à mémoire électronique ;
- la figure 2 est une vue en perspective éclatée du commutateur illustré à la figure 1 ;
- la figure 3 est une vue éclatée et en section partielle par un plan vertical médian du commutateur illustré aux figures 1 et 2 ;
- les figures 4A et 4B sont deux schémas illustrant les positions relatives du contact mobile par rapport aux éléments de contact fixes pour les deux positions principales de fonctionnement du commutateur ;
- la figure 5 est un diagramme force-course illustrant notamment la valeur de l'effort de rappel élastique appliqué au poussoir en fonction de la course de déplacement de ce dernier ; et
- la figure 6 est une vue similaire à celle de la figure 1 illustrant un second mode de réalisation d'un commutateur réalisé conformément aux enseignements de l'invention.

On a représenté sur les figures un commutateur électrique 10 qui est prévu pour être intégré dans un dispositif (non représenté) de lecture des informations contenues dans une carte à mémoire électronique C.

Le commutateur 10 est constitué pour l'essentiel par un boîtier de commutateur 12 à l'intérieur duquel est monté coulissant un poussoir 14 qui est susceptible de se déplacer dans les deux sens parallèlement à la direction I d'introduction de la carte C dont le bord transversal antérieur 16 coopère avec une extrémité d'actionnement 18 du poussoir 14 qui fait saillie à l'extérieur du boîtier 12.

Le boîtier 12 est une pièce moulée en matière plastique isolante qui comporte un logement central 22 qui reçoit notamment le poussoir 14.

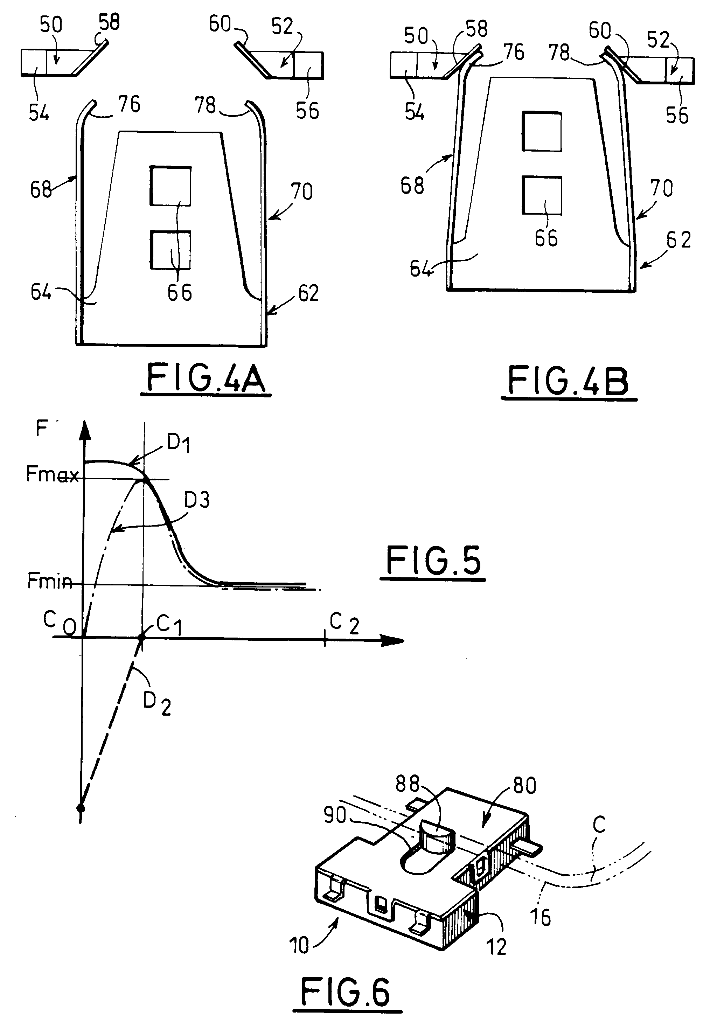

Le poussoir 14 comporte un corps allongé 24 dont la face inférieure 26, en considérant la figure 3, comporte deux bossages 28 qui sont reçus en coulissement dans une rainure 30 formée dans le fond 32 du logement 22 et dont les extrémités axiales opposées 34 et 36 constituent les butées mécaniques de fin de course du poussoir 14.

L'extrémité d'entraînement 18 du poussoir 14 fait saillie hors du logement 22 par une fenêtre 38 formée dans la face transversale de ce dernier tourné vers le bord antérieur 16 de la carte C.

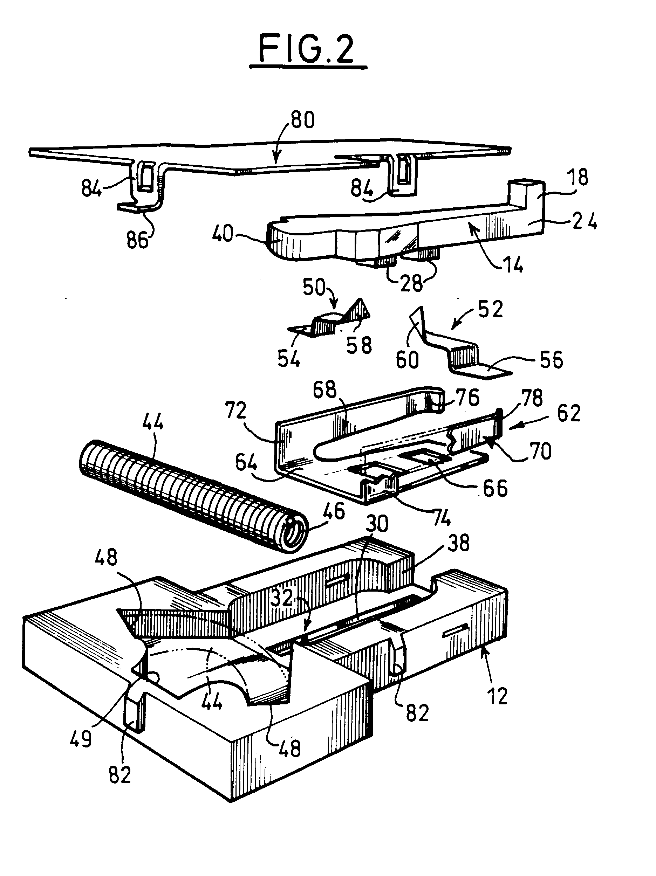

L'autre extrémité 40 du poussoir, appelée par la suite extrémité de déclenchement et qui est opposée à l'extrémité d'actionnement 18, présente un profil arrondi qui coopère avec la partie centrale cambrée et convexe en vis-à-vis 42 d'un ressort hélicoïdal 44 qui est disposé dans le boîtier 12 selon une direction transversale sensiblement perpendiculaire à la direction de coulissement du poussoir 14, comme cela est illustré en silhouette sur la figure 2.

Chacune des extrémités opposées 46 du ressort 14 est reçue dans un logement latéral 48 qui prolonge le logement 22 du boîtier 12 de manière que, au repos, le ressort 44 occupe sa position stable cambrée illustrée notamment à la figure 3.

A l'opposé de l'extrémité 40 du poussoir 14, le logement 22 comporte un évidement 49 dans lequel est susceptible de se déformer la partie centrale cambrée 42 du ressort 44 lorsque l'extrémité 40 du poussoir 14 agit sur celle-ci.

Le corps du boîtier 12 porte deux éléments de contact électrique fixes 50 et 52 qui sont agencés latéralement de part et d'autre du corps 24 du poussoir 14.

Chaque élément de contact fixe 50, 52 est réalisé sous la forme d'une lame métallique pliée dont les extrémités libres 54 et 56 font saillie hors du boîtier 12 pour constituer des bornes de raccordement et de fixation par soudage sur une plaque à circuit imprimé (non représentée) pour permettre le montage du commutateur selon la technique du report à plat des composants.

Chaque élément de contact fixe 50, 52 comporte une patte de contact 58, 60 disposée à l'intérieur du logement 22 et qui est inclinée par rapport à la direction de déplacement du poussoir 14 pour constituer une rampe dont la fonction sera expliquée par la suite.

Les éléments de contact fixes 50 et 52 sont en partie noyés dans le corps surmoulé en matière plastique 12 du commutateur.

Le commutateur comporte un élément de contact mobile 62 qui se présente sous la forme d'un chariot fixé à la face inférieure 26 du corps 24 du poussoir.

A cet effet, l'élément de contact mobile 62 comporte une plaque principale horizontale 64 qui comporte deux trous 66 de section sensiblement rectangulaire qui sont traversés par les bossages 28 du poussoir 14 pour lier le contact mobile 62 en translation avec le poussoir 14.

Le contact mobile 62 comporte également deux lames de contact électrique déformables élastiquement 68 et 70 qui s'étendent chacune sensiblement dans un plan vertical perpendiculaire au plan de la plaque de fixation 64 et dont chacune est réalisée sous la forme d'une poutre déformable élastiquement.

Chaque lame de contact 68, 70 est reliée par une extrémité 72, 74 à la plaque 64 et s'étend longitudinalement, c'est-à-dire parallèlement à la direction principale du corps 24 du poussoir 14, pour se terminer par une extrémité libre de contact 76, 78 légèrement incurvée vers l'intérieur qui est susceptible de coopérer avec une patte de contact formant rampe 58, 60 respectivement des éléments de contact fixes 50 et 52.

Le boîtier 12 du commutateur dont la face supérieure est ouverte est fermé par un couvercle 80 en métal qui constitue une cage emboîtée élastiquement sur des ergots 82 formés sur les faces latérales et transversale arrière du boîtier 12 et qui sont reçues dans des fenêtres 83 formées dans des pattes 84 du couvercle métallique 80 rabattues verticalement vers le bas.

La patte arrière 84, à gauche en considérant la figure 3, se prolonge par une borne 86 permettant de compléter les moyens de fixation par soudage du commutateur 10 sur une plaque à circuit imprimé et de relier le couvercle 80 au circuit de masse de manière qu'il constitue une protection contre les perturbations électrostatiques.

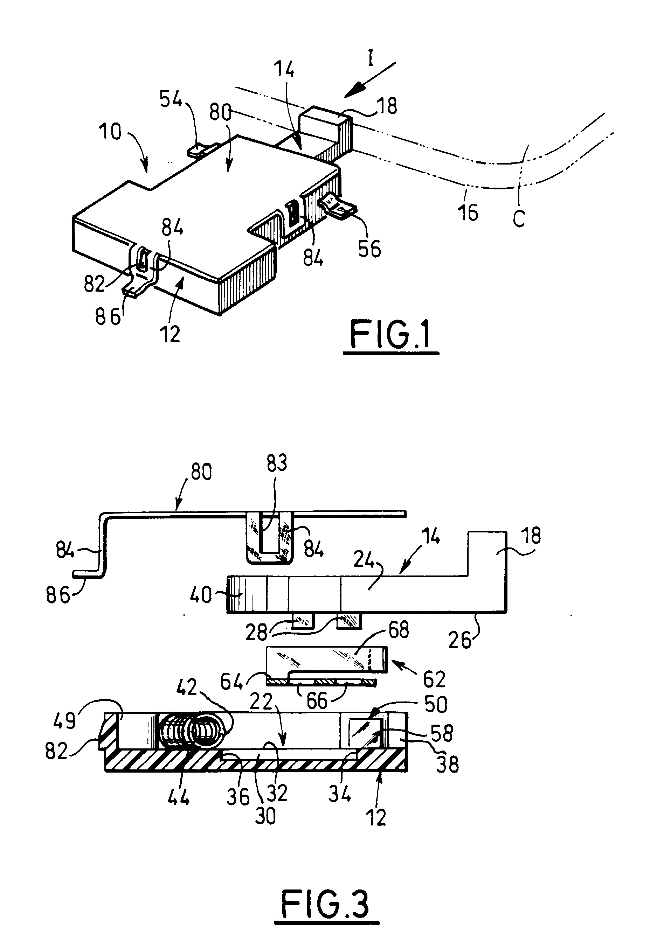

Le commutateur illustré sur les figures 1 à 5 est un commutateur qui est en position normalement fermée, c'est-à-dire que, en position de repos du poussoir 14 qui est sollicité par le ressort 44 et dans laquelle un des bossages 28 est en appui contre l'extrémité axiale 34 de la rainure 30, le contact électrique entre les éléments de contact fixes 50 et 52 est établi par le contact mobile 62.

Comme cela est illustré à la figure 4A, les lames élastiques déformables 68 et 70 sont alors dans une position précontrainte contre les pattes formant rampes 58 et 60 des éléments de contact fixes 50 et 52 et appliquent ainsi à l'élément de contact mobile 62, et donc au poussoir 14, un effort élastique tendant à le solliciter dans le sens de l'ouverture du contact et à l'encontre de l'effort de rappel qui lui est appliqué par le ressort cambré 44.

On décrira maintenant le mode de fonctionnement du commutateur de détection de présence d'une carte en se reportant notamment aux figures 4A, 4B et 5.

Sur la figure 5, on a représenté un premier diagramme D1 illustrant la valeur de l'effort élastique de rappel appliqué au poussoir 14 par le ressort cambré 44 en fonction de la course de déplacement du poussoir 14 entre sa position de repos C0, la position C1 de déclenchement du commutateur, c'est-à-dire la position d'ouverte du contact électrique, et la position de fin de course C2.

Le second diagramme D2 représente la valeur de l'effort élastique appliquée au poussoir 14 par les lames déformables 68 et 70 du contact mobile 62 entre la position de repos du poussoir et la position d'ouverture du contact C1 dans laquelle les lames 68 et 70 ne sont plus précontraintes par les pattes 58 et 60 et n'appliquent plus aucun effort élastique au poussoir 14.

Enfin, le diagramme D3 est le diagramme résultant correspondant à la somme des diagrammes D1 et D2 qui illustre la valeur de l'effort élastique de rappel résultant appliquée au poussoir 14 en fonction de la course de déplacement de ce dernier par rapport au boîtier 12 entre les positions C0 et C2.

Comme on peut le voir sur la figure 5, la valeur de l'effort résultant de rappel du poussoir 14 est initialement pratiquement nulle puis passe par un maximum Fmax correspondant sensiblement à la position de déclenchement C1 du commutateur 10, puis décroît rapidement pour atteindre une valeur résiduelle de seuil inférieur Fmin qui correspond à la valeur résiduelle de la force de répulsion appliquée par le commutateur 10 à la carte C après l'introduction de la carte.

Cette force résiduelle de répulsion peut être particulièrement faible et sa valeur est parfaitement maîtrisée par le choix du ressort cambré 44.

Du fait de l'ouverture du contact électrique au-delà de la position de déclenchement C1 et de la possibilité de déformer de manière importante la partie centrale cambrée 42 du ressort 44 dans l'évidement 49, il est possible de disposer d'une course supplémentaire importante C1 - C2 au-delà de la position de déclenchement C1 sans accroître la force résiduelle de répulsion Fmin appliquée à la carte.

Lorsque l'utilisateur retire la carte C, le ressort 44 reprend sa position cambrée de repos en accroissant progressivement la valeur de l'effort de rappel qu'il applique au poussoir 14 en approchant de la position de commutation correspondant alors à l'établissement du contact électrique entre les contacts fixes 50 et 52.

La venue en contact des extrémités 76 et 78 des lames déformables élastiquement 66 et 70 avec les rampes 58 et 60 des éléments de contact fixes 50 et 52 provoque à nouveau la création d'un effort élastique opposé qui aboutit à un effort résultant quasiment nul appliqué au poussoir dans sa position de repos C0.

Dans la variante de réalisation illustrée sur la figure 6, le poussoir 14 comporte une patte de déclenchement 88 qui fait saillie verticalement à travers une lumière longitudinale 90 du couvercle 80 du commutateur 10 de manière à permettre l'agencement de ce dernier sous le plan de la carte et à provoquer l'actionnement du poussoir 14 par la coopération du bord antérieur 16 de la carte C avec la patte 88 du poussoir.

La conception selon l'invention est particulièrement avantageuse en ce qu'elle permet de réaliser un commutateur de présence d'une carte de très petites dimensions dont la longueur totale est d'environ 7 mm et l'épaisseur est de 1,5 mm avec une course de déclenchement C1 = 0,3 mm, une course totale C2 = 1,3 mm et une force résiduelle de répulsion Fmin < 0,2 N.

Du fait de la présence d'une course supplémentaire C1-C2 relativement importante, le commutateur selon l'invention peut très facilement être monté selon la technique du report à plat et par une machine de mise en oeuvre automatique de cette technique sans nécessiter un positionnement du commutateur sur une carte à circuit imprimé dont la précision dépasserait celle de la précision de positionnement des composants par ce type de machine.

## Revendications

1. Commutateur électrique (10) du type comportant un poussoir de déclenchement (14) qui est monté coulissant dans un boîtier de commutateur (12), un élément de contact mobile (62) qui est lié au poussoir (14) et qui coopère avec au moins un élément de contact fixe (50, 52) porté par le boîtier (12) du commutateur, et des moyens de rappel élastique (44, 62) du poussoir (14) vers une position stable de repos dont la valeur de la force de rappel (F) diminue lorsque la course d'actionnement (C) du poussoir (14) dépasse une valeur prédéterminée (C1), caractérisé en ce que la dite valeur prédéterminée (C1) de la course correspond au déclenchement du commutateur, et en ce que la valeur de la force de rappel (F) augmente puis diminue lors de la course d'actionnement en passant par un maximum (Fmax) correspondant au déclenchement du commutateur.

2. Commutateur selon la revendication 1 caractérisé en ce que les moyens de rappel élastique comportent au moins un ressort de rappel (44) disposé entre le poussoir (14) et le boîtier du commutateur (12) et qui sollicite le poussoir (14) vers sa position stable de repos.

3. Commutateur selon la revendication 2, caractérisé en ce que le ressort de rappel est un ressort hélicoïdal cambré (44) disposé à l'intérieur du boîtier (12) et qui s'étend selon une direction transversale sensiblement perpendiculaire à la direction de déplacement du poussoir (14) dont une extrémité de déclenchement (40) coopère avec la partie centrale convexe (42) du ressort cambré (44).

4. Commutateur selon la revendication 3, caractérisé en ce que chacune des extrémités (46) du ressort (44) est reçue dans un logement (48) dont l'axe est incliné par rapport à la direction de déplacement du poussoir (14) de façon à conférer au ressort (44) une cambrure stable au repos dont la convexité (42) est tournée vers l'extrémité de déclenchement du poussoir (14).

5. Commutateur selon l'une quelconque des revendications 2 à 4, caractérisé en ce que le contact mobile (62) comporte au moins une lame de contact déformable élastiquement (68, 70) dont une extrémité libre (76, 78) coopère avec l'élément de contact fixe (50, 52) et qui, dans la position de repos du poussoir, exerce une force élastique sur le poussoir (14) opposée à la force exercée sur le ressort de rappel.

6. Commutateur selon la revendication 5, caractérisé en ce que la lame de contact (68, 70) s'étend selon une direction sensiblement parallèle à la direction de coulissement du poussoir (14) et en ce que son extrémité libre (76, 78) coopère avec une rampe (58, 60) formée sur le contact fixe (50, 52) qui est inclinée par rapport à la direction de déplacement du poussoir (14).

7. Commutateur selon l'une des revendications 5 ou 6, caractérisé en ce que, dans la position de repos du poussoir, l'extrémité libre (76, 78) de la lame de contact déformable élastiquement (68, 70) est en contact électrique avec l'élément de contact fixe (50, 52) de manière à appliquer au poussoir (14) une force élastique opposée à celle qui lui est appliquée par le ressort de rappel (44).

8. Commutateur selon l'une quelconque des revendications précédentes, caractérisé en ce qu'il présente une symétrie de conception par rapport à un plan médian passant par l'axe de déplacement du poussoir (14).

9. Commutateur selon la revendication 8 prise en combinaison avec l'une quelconque des revendications 5 à 7, caractérisé en ce que le contact mobile (62) comporte deux lames de contact déformables élastiquement (68, 70) agencées symétriquement de part et d'autre du corps (24) du poussoir (14).

10. Commutateur selon l'une quelconque des revendications précédentes, pour la détection de la présence d'une carte (C) dans un dispositif de lecture des informations contenues par la carte, notamment d'une carte à mémoire électronique, caractérisé en ce que l'extrémité d'actionnement (18, 88) du poussoir (14) fait saillie à l'extérieur du boîtier (12) pour coopérer avec le bord transversal antérieur (16) de la carte perpendiculaire à la direction (I) d'introduction de la carte, le poussoir (14) de déclenchement étant monté coulissant selon une direction sensiblement parallèle à la direction (I) d'introduction de la carte.

## Patentansprüche

1. Elektrischer Schalter (10) eines Typs der umfaßt: einen Auslöseschieber (14), der in einem Schaltergehäuse (12) verschiebbar montiert ist, ein bewegliches Kontaktelement (62), das mit dem Schieber (14) verbunden ist und das mit wenigstens einem ortsfesten Kontaktelement (50, 52), das von dem Gehäuse (12) des Schalters getragen wird, zusammenwirkt, und elastische Rückstellmittel (44, 62) zum Rückstellen des Schiebers (14) in eine stabile Ruheposition, bei denen der Wert der Rückstellkraft (F) abnimmt, wenn der Betätigungsweg (C) des Schiebers (14) einen vorbestimmten Wert (C1) überschreitet, dadurch gekennzeichnet, daß der vorbestimmte Wert (C1) des Weges dem Auslösen des Schalters entspricht und daß der Wert der Rückstellkraft (F) auf dem Betätigungsweg erst zu- und dann abnimmt und dabei ein Maximum (Fmax) durchläuft, das dem Auslösen des Schalters entspricht.

2. Schalter nach Anspruch 1, dadurch gekennzeichnet, daß die elastischen Rückstellmittel wenigstens eine Rückstellfeder (44) umfassen, die zwischen dem Schieber (14) und dem Gehäuse (12) des Schalters angeordnet ist und die den Schieber (14) in Richtung seiner stabilen Ruheposition belastet.

3. Schalter nach Anspruch 2, dadurch gekennzeichnet, daß die Rückstellfeder eine gewölbte Schraubenfeder (44) ist, die im Inneren des Gehäuses (12) angeordnet ist und die sich in einer Querrichtung im wesentlichen senkrecht zur Verschiebungsrichtung des Schiebers (14) erstreckt, von dem ein Auslöseende (40) mit dem konvexen mittleren Abschnitt (42) der gewolbten Feder (44) zusammenwirkt.

4. Schalter nach Anspruch 3, dadurch gekennzeichnet, daß jedes der Enden (46) der Feder (44) in einer Aussparung (48) aufgenommen ist, deren Achse bezogen auf die Verschiebungsrichtung des Schiebers (14) geneigt ist, um der Feder (44) eine stabile Krümmung in Ruheposition zu verleihen, deren Konvexität (42) dem Auslöseende des Schiebers (14) zugewandt ist.

5. Schalter nach einem beliebigen der Ansprüche 2 bis 4, dadurch gekennzeichnet, daß der bewegliche Kontakt (62) wenigstens eine elastisch verformbare Kontaktzunge (68, 70) umfaßt, von der ein freies Ende (76, 78) mit dem ortsfesten Kontaktelement (50, 52) zusammenwirkt, und die in der Ruheposition des Schiebers eine elastische Kraft auf den Schieber (14) ausübt, die der auf die Rückstellfeder ausgeübten Kraft entgegen gerichtet ist.

6. Schalter nach Anspruch 5, dadurch gekennzeichnet, daß die Kontaktzunge (68, 70) sich in einer im wesentlichen zur Verschiebungsrichtung des Schiebers (14) parallelen Richtung erstreckt, und daß ihr freies Ende (76, 78) mit einer an dem ortsfesten Kontakt (50, 52) gebildeten Rampe (58, 60) zusammenwirkt, die in Bezug auf die Verschiebungsrichtung des Schiebers (14) geneigt ist.

7. Schalter nach einem der Ansprüche 5 oder 6, dadurch gekennzeichnet, daß in der Ruheposition des Schiebers das freie Ende (76, 78) der elastisch verformbaren Kontaktzunge (68, 70) in elektrischem Kontakt mit dem ortsfesten Kontaktelement (50, 52) ist, so daß sie auf den Schieber (14) eine elastische Kraft entgegen derjenigen ausübt, die von der Rückstellfeder (44) auf ihn ausgeübt wird.

8. Schalter nach einem beliebigen der vorhergehenden Ansprüche, dadurch gekennzeichnet, daß er eine Symmetrie der Konstruktion in Bezug auf eine durch die Verschiebungsachse des Schiebers (14) verlaufende Mittelebene aufweist.

9. Schalter nach Anspruch 8 in Kombination mit einem beliebigen der Ansprüche 5 bis 7, dadurch gekennzeichnet, daß der bewegliche Kontakt (62) zwei elastisch verformbare Kontaktzungen (68, 70) umfaßt, die symmetrisch beiderseits des Körpers (24) des Schiebers (14) angeordnet sind.

10. Schalter nach einem beliebigen der vorhergehenden Ansprüche zur Erfassung der Anwesenheit einer Karte (C) in einer Lesevorrichtung zum Lesen der in der Karte enthaltenen Informationen, insbesondere einer elektronischen Speicherkarte, dadurch gekennzeichnet, daß das Betätigungsende (18, 88) des Schiebers (14) aus dem Gehäuse (12) übersteht, um mit der vorderen, quer verlaufenden, zur Einführungsrichtung (I) der Karte senkrechten Kante der Karte zusammenzuwirken, wobei der Auslöseschieber (14) verschiebbar in einer im wesentlichen zur Einführungsrichtung (I) der Karte parallelen Richtung montiert ist.

## Claims

1. Electrical switch (10) of the type containing an actuating plunger (14) which is mounted in a sliding manner in a switch housing (12), a moving contact element (62) which is connected to the plunger (14) and which interacts with at least one fixed contact element (50, 52) carried by the switch housing (12), and means (44, 62) for elastically returning the plunger (44) to a stable position of rest, in which the value of the return force (F) decreases when the actuating travel (C) of the plunger (14) exceeds a predetermined value (C1), characterised in that said predetermined value (C1) of travel corresponds to the actuation of the switch, and in that the value of the return force (F) increases then decreases during the actuating travel, passing through a maximum (Fmax) corresponding to actuation of the switch.

2. Switch according to Claim 1, characterised in that the elastic return means contain at least one return spring (44) arranged between the plunger (14) and the switch housing (12) and which pushes the plunger (14) into its stable position of rest.

3. Switch according to Claim 2, characterised in that the return spring is an arched coil spring (44) arranged inside the housing (12) and which extends in a transverse direction substantially perpendicular to the direction of displacement of the plunger (14) whose triggering end (40) interacts with the convex central part (42) of the arched spring (44).

4. Switch according to Claim 3, characterised in that each end (46) of the spring (44) is accommodated in a housing (48) whose axis is inclined with respect to the direction of displacement of the plunger (14) so as to give the spring (44) a stable curvature at rest, the convexity (42) of which is directed towards the triggering end of the plunger (14).

5. Switch according to any one of Claims 2 to 4, characterised in that the moving contact (62) includes at least one elastically deformable contact blade (68, 70), a free end (76, 78) of which interacts with the fixed contact element (50, 52) and which, in the rest position of the plunger, exerts an elastic force on the plunger (14) which opposes the force exerted on the return spring.

6. Switch according to Claim 5, characterised in that the contact blade (68, 70) extends in a direction substantially parallel to the direction of sliding of the plunger (14) and in that its free end (76, 78) interacts with a ramp (58, 60) which is formed on the fixed contact (50, 52) and which is inclined with respect to the direction of displacement of the plunger (14).

7. Switch according to one of Claims 5 or 6,
characterised in that in the rest position of the plunger, the free end (76, 78) of the elastically deformable contact blade (68, 70) is in electrical contact with the fixed contact element (50, 52) so as to apply to the plunger (14) an elastic force opposed to that which is applied to it by the return spring (44).

8. Switch according to any one of the preceding Claims, characterised in that the switch has symmetry of design with respect to a median plane passing through the axis of displacement of the plunger (14).

9. Switch according to Claim 8 taken in conjunction with any one of Claims 5 to 7, characterised in that the moving contact (62) contains two elastically deformable contact blades (68, 70) arranged symmetrically on either side of the body (24) of the plunger (14).

10. Switch according to any one of the preceding Claims, for detecting the presence of a card (C) in a device for reading the data contained in the card, in particular an electronic memory card, characterised in that an actuating end (18, 88) of the plunger (14) projects from the housing (12) in order to interact with the front transverse edge (16) of the card perpendicular to the direction (I) of insertion of the card, the actuating plunger (14) being mounted in a sliding manner in a direction substantially parallel to the direction (I) of insertion of the card.
